# EUROPÄISCHE PATENTANMELDUNG

(11) **EP 2 034 226 A2**
(43) Veröffentlichungstag der Anmeldung: **11.03.2009**
(21) Anmeldenummer: 08015005.5
(22) Anmeldetag: 26.08.2008
(51) Int. Cl.: F16K 51/02, F16K 1/30

(54) **Gasdosierventiel**

(30) Priorität: 10.09.2007 DE 102007042854
(71) Anmelder: VAT Holding AG, 9469 Haag (CH)
(72) Erfinder: Lenherr, Bruno, 9473 Gams (CH)
(74) Vertreter: Hofmann, Ralf U.

(57) **Zusammenfassung**

Gasdosierventil mit einem Ventilsitz (1) und einem in einer Schließstellung an den Ventilsitz (1) anpressbaren Verschlussorgan (2) sowie einem kippbaren Hebel (3) zum Anpressen des Verschlussorgans (2) an den Ventilsitz (1), wobei zwischen dem Verschlussorgan (2) und dem Hebel (3) eine Übertragungsplatte (4) in der Weise angeordnet ist, dass der Hebel (3) oder ein an ihm angeordnetes Übertragungselement (5) während einer Kippbewegung des Hebels (3) an der Übertragungsplatte (4) entlang gleitet, wodurch das Verschlussorgan (2) von einer Öffnungsstellung in seine Schließstellung bewegbar ist.

## Beschreibung

Die vorliegende Erfindung betrifft ein Gasdosierventil mit einem Ventilsitz und einem in einer Schließstellung an den Ventilsitz anpressbaren Verschlussorgan sowie einem kippbaren Hebel zum Anpressen des Verschlussorgans an den Ventilsitz.

Gattungsgemäße Gasdosierventile kommen vor allem in der sogenannten Vakuumtechnik zum Einsatz, bei der technisch anspruchsvolle Herstellungsprozesse in einem künstlich realisierten, weitgehend gasfreien Raum ablaufen. Die gattungsgemäßen Gasdosierventile werden z. B. dazu benötigt, um beim Vakuumprozess laufend eine genau dosierte Menge eines gasförmigen Reaktionspartners zuzuführen oder den Druck im Vakuumraum auf einem vorbestimmten Niveau zu halten. Aufgrund dieser Aufgabenstellung müssen diese Gasdosierventile zum einen auch im Bereich sehr hohen Unterdrucks noch zuverlässig und dauerhaft metallisch abdichtend schließen und zum anderen unter diesen Bedingungen auch noch eine Feindosierung von Gasen ermöglichen. Hieraus ergeben sich sehr hohe Anforderungen an die Präzision bei der Fertigung der Gasdosierventile.

Beim Stand der Technik ist es z. B. aus der US 4 903 938 bekannt, linear verschiebbare Aktoren zum Bewegen des Verschlussorgans zwischen Schließstellung und Öffnungsstellung zu verwenden. Diese Technik hat den Nachteil, dass sie einerseits wegen Materialausdehnung sehr temperaturanfällig ist und andererseits mit höchster Präzision gebaut werden muss.

Um hier eine Verbesserung zu bewirken, ist es z. B. aus der CH 600 224 bekannt, gattungsgemäße Gasdosierventile mit einem kippbaren Hebel zum Anpressen des Verschlussorgans an den Ventilsitz zu verwenden. Dies hat den Vorteil, dass durch den kippbaren Hebel und entsprechende Hebelübersetzung große Kräfte bei gleichzeitig sehr präzise einstellbaren Hüben realisierbar sind. Allerdings stellt sich bei den kippbaren Hebeln die Problematik, dass diese neben der gewünschten Bewegungskomponente orthogonal zum Ventilsitz auch eine Bewegungs- bzw. Kraftkomponente in senkrechter Richtung zur gewünschten Bewegungsrichtung des Verschlussorgans erzeugen, welche kompensiert werden muss und nicht auf das Verschlussorgan einwirken sollte. Bei der CH 600 224 ist hierzu vorgesehen, zwischen dem kippbaren Hebel und dem Verschlussorgan einen beidseitig auf spitzen Enden gelagerten Druckbolzen vorzusehen, der dafür sorgen soll, dass auf das Verschlussorgan nur eine Kraft mit der gewünschten Richtungskomponente übertragen wird. Aus offenkundiger Vorbenutzung ist es darüber hinaus bekannt, bei einem ansonsten grundsätzlich gleichen Aufbau, anstelle der Spitzen an den Enden des Druckbolzens Kugeln vorzusehen. Ein solches Ventil wird z. B. von dem Unternehmen Pfeifer Vacuum GmbH unter dem Handelsnamen UDV 040 vertrieben.

Trotz einer Verbesserung gegenüber dem vorab genannten Stand der Technik haben die bisher bekannten gattungsgemäßen Gasdosierventile mit kippbarem Hebel den Nachteil, dass sie mit sehr hoher Präzision gefertigt werden müssen und dass es bei Abnutzung und Verschleiß der Druckbolzen oder anderer Ventilteile mit der Zeit zum Verkanten einzelner Bauteile kommen kann, was nur bedingt durch Nachjustierung behebbar ist.

Aufgabe der vorliegenden Erfindung ist es daher, gattungsgemäße Gasdosierventile dahingehend zu verbessern, dass auch dauerhaft sehr präzise Hübe des Verschlussorgans mit ausreichend großen Kräften möglich sind.

Erfindungsgemäß wird dies durch ein Gasdosierventil gemäß des Patentanspruchs 1 erreicht.

Durch die Verwendung des kippbaren Hebels ist es bei Einstellung der entsprechenden Hebelverhältnisse möglich, bei der Betätigung des Hebels per Hand oder mittels eines Aktuators einen relativ großen Weg vorzusehen und diesen auf der Seite der Übertragungsplatte in einen relativ kurzen Weg umzusetzen. Dies hat zwei Vorteile. Zum einen werden damit auf der Seite der Übertragungsplatte große Kräfte bereitgestellt. Zum anderen kann der auf der Übertragungsplatte zurückgelegte Weg und damit auch der Schließhub des Verschlussorgans sehr exakt eingestellt werden. Durch die Bewegung des Hebels bzw. des an ihm angeordneten Übertragungselementes entlang der Übertragungsplatte können auf einfachste Weise Wegreserven bereit gestellt werden, ohne dass dabei auf fixe Anschläge und Begrenzungen Rücksicht genommen werden muss. Hierdurch können Veränderungen der Länge einzelner Bauteile durch Temperaturschwankung oder Abnutzung einfach durch einen entsprechend größeren oder kleineren Weg bei der Betätigung des Hebels ausgeglichen werden, ohne dass darunter die Präzision in der Gasdosierung leidet. Darüber hinaus ist durch das Entlanggleiten des Hebels oder seines Übertragungselementes an der Übertragungsplatte sichergestellt, dass es auch nach längerem Gebrauch des Gasdosierventils nicht zu einem abnutzungsbedingten Verkanten einzelner Bauteile kommt. Insgesamt ist durch die Erfindung ein sehr robustes und vergleichsweise einfach herstellbares, aber sehr zuverlässig und präzise arbeitendes Gasdosierventil geschaffen. Dieses kann für den sogenannten Hochvakuum- bzw. Ultrahochvakuumbereich eingesetzt werden. Vom Hochvakuumbereich spricht man bei Gasdruckbereichen kleiner 10⁻³mbar (Millibar). Vom Ultrahochvakuumbereich spricht man bei Gasdrücken kleiner 10⁻⁸mbar. Das Gasdosierventil gemäß der Erfindung kann für die Gasdosierung in einem Gasdruckbereich kleiner 10⁻³mbar, vorzugsweise kleiner 10⁻⁸mbar, ausgelegt sein. Diese Werte sind, wie auch die im Folgenden angegebenen Dosierraten, insbesondere auf Helium bezogen. Bezüglich der Dosierraten kann das erfindungsgemäße Gasdosierventil so ausgelegt werden, dass es für Dosierraten kleiner 10⁻³mbarl/s (Millibar Liter pro Sekunde) geeignet ist. Es ist sogar möglich, das Gasdosierventil für Dosierraten kleiner 10⁻⁸mbarl/s auszulegen.

Um das Gasdosierventil zu Reinigungszwecken ausheizen zu können, ist es vorzugsweise als so genanntes Ganzmetallventil ausgeführt. Hiervon spricht man, wenn zumindest alle mit dem zu dosierenden Gas in Berührung kommenden Bauteile aus Metall gefertigt sind. Günstig ist es, wenn alle Bauteile des Gasdosierventils aus Metall gefertigt sind. Neben Metall können aber auch keramische Bauteile in einem solchen Gasdosierventil verwendet werden, z. B. für den Ventilsitz. Als bevorzugte Metalle, insbesondere für Ventilsitz und/oder Verschlussorgane sind Nickellegierungen oder Edelstähle zu nennen. Geeignete Nickellegierungen werden z. B. unter dem Handelsnamen Inconel oder Nimonic vertrieben. Günstigerweise ist somit vorgesehen, dass zumindest alle mit dem zu dosierenden Gas in Berührung kommenden Bauteile, vorzugsweise alle Bauteile des Gasdosierventils aus Metall, vorzugsweise einer Nickellegierung oder Edelstahl, oder aus Keramik gefertigt sind.
Weitere Einzelheiten und Vorteile der Erfindung werden anhand von zwei bevorzugten Ausführungsbeispielen in der nachfolgenden Figurenbeschreibung erläutert. Dabei zeigen:
Die Fig. 1 und 2 das erste erfindungsgemäße Ausführungsbeispiel in Öffnungsstellung
Fig. 3 und 4 das erste Ausführungsbeispiel in Schließstellung
Fig. 5 das erste Ausführungsbeispiel von außen und
Fig. 6 eine alternative erfindungsgemäße Ausgestaltung in Form eines zweiten Ausführungsbeispiels.

Bei beiden Ausführungsbeispielen weist das Gasdosierventil zwei miteinander verbundene, insbesondere verschraubte, Gehäuseteile 15 und 16 auf. Im unteren Gehäuseteil 16 sind der Gaseinlasskanal 20 sowie der Gasauslasskanal 19 vorgesehen. Über entsprechende Flansche 18 können Gasleitungen angeschraubt oder anderweitig daran befestigt werden. Im Gehäuseunterteil 16 ist auch der Ventilsitz 1 vorgesehen. Das hier in Form einer Membrane ausgebildete Verschlussorgan 2 ist zwischen dem oberen Gehäuseteil 15 und dem unteren Gehäuseteil 16 eingespannt. Dies wird weiter unten noch detaillierter erläutert.

Im oberen Gehäuseteil 15 ist der kippbare Hebel 3 um eine im oberen Gehäuse Kippachse 6 kippbar gelagert. Diese Kippachse 6 ist in dem hier dargestellten Ausführungsbeispiel exzentrisch am Kipphebel 3 angeordnet. Diese Exzentrizität wird erreicht, indem die Kippachse 6 seitlich neben der Längsachse 22 des Hebels 3 an diesem angreift. Betätigt wird der Hebel 3 an seinem oberen Ende von einem Aktuator 14. Dies kann, wie hier dargestellt, ein von Hand ein- und ausschraubbarer Knopf sein. Es sind aber auch alle anderen beim Stand der Technik an sich bekannten hydraulisch, pneumatisch, elektrisch oder anderweitig betreibbaren Aktuatoren zur Betätigung des Hebels 3 denkbar. Auf der bezüglich der Kippachse 6 entgegengesetzten Seite liegt der Hebel 3, hier mittels des als Kugel ausgeformten Übertragungselementes 5, an der Übertragungsplatte 4 an. Hierbei ist darauf hinzuweisen, dass nicht zwingend ein Übertragungselement 5 vorgesehen sein muss, sondern der Hebel 3 auch selbst direkt an der Übertragungsplatte 4 entlang gleiten kann. Günstig ist jedenfalls, wenn der Hebel 3 oder das Übertragungselement 5 eine abgerundete Oberfläche aufweisen, mit der sie an der Übertragungsplatte 4 entlang gleiten. Anstelle der Kugel könnte als Übertragungselement 5 natürlich auch eine drehbar gelagerte Walze oder ein anderes Gleitelement vorgesehen sein.

Im hier gezeigten Ausführungsbeispiel steht der Abstand 27 des Berührungspunkt des Übertragungselementes 5 auf der Übertragungsplatte 4 von der Kippachse 6 einerseits zum Abstand 28 der Kippachse 6 vom Angriffspunkt des Aktuators 14 am Hebel 3 andererseits in einem Verhältnis von ca. 12 zu 83. Dieses Hebelverhältnis resultiert in einer entsprechenden Untersetzung des Weges und Übersetzung der letztlich vom Übertragungselement 5 auf die Übertragungsplatte 4 eingebrachten Kräfte. In diesem Sinn ist es günstig, ein Verhältnis der genannten Abstände 27 und 28 von zumindest 1 zu 5 vorzusehen.

Günstige Ausführungsformen der Erfindung sehen vor, dass zwischen einer Verbindungslinie, welche zwischen der Kippachse 6 und dem Berührungspunkt des Übertragungselementes 5 auf der Übertragungsplatte 4 gezogen ist, und der Bewegungsrichtung des Verschlussorgans 2 (hier parallel zur Längsachse 25) bei der Kippbewegung des Hebels 3 Winkelbereiche von maximal 45°, vorzugsweise von maximal 30°, eingenommen werden.

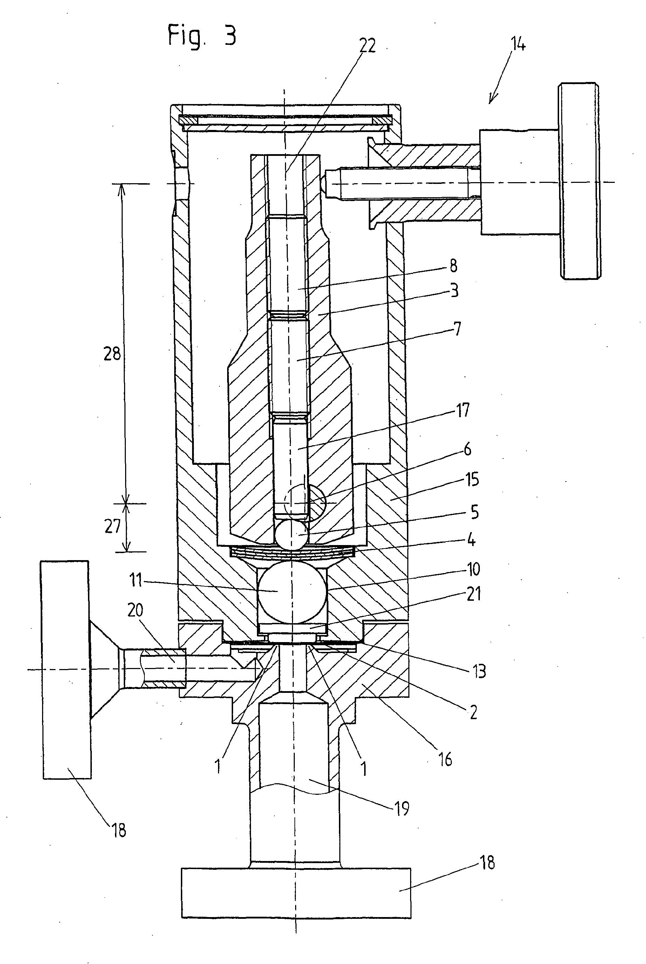

Grundsätzlich ist es günstig, wenn der Hebel 3 bzw. das Übertragungselement 5 beim Entlanggleiten immer auf einer Seite eines Totpunktes bleibt. Dies wird im hier dargestellten Ausführungsbeispiel erreicht, wenn die Längsachse 22 des Hebels 3 nie über die Längsachse 25 des Gehäuses 15 hinwegbewegt wird, sondern im Gegenteil auch in der Schließstellung noch von dem Totpunkt beabstandet ist bzw. maximal den Totpunkt erreicht (Fig. 3). Hierbei ist zu bedenken, dass der Totpunkt der Punkt der maximalen Auslenkung der Übertragungsplatte 4 ist und somit ein über den Totpunkt hinweg Bewegen des Hebels 3 in einer Entlastung der Übertragungsplatte 4 resultieren würde. Um immer noch eine Wegreserve bereitzuhalten, ist es daher günstig, wenn die Schließstellung des Verschlussorgans 2 bereits erreicht wird, bevor der Hebel 3 bzw. das Übertragungselement 5 seinen Totpunkt erreicht. Mittels dieser Wegreserve kann auf thermisch oder abnutzungsbedingte Veränderungen der Länge einzelner Bauteile reagiert werden, so dass auch in einem solchen Fall das Ventil noch vollständig schließbar ist, indem man den Hebel 3 etwas weiter kippt und die vorhandene Reserve ausnutzt.

Um dies entsprechend einstellen zu können, ist im gezeigten Ausführungsbeispiel eine Justiereinrichtung 7 in Form einer Madenschraube vorgesehen, die über den Zwischenstift 17 den Abstand 27 zwischen dem Berührungspunkt des Übertragungselementes 5 auf der Übertragungsplatte 4 und der Kippachse 6 justierbar gestaltet. Um den einmal eingestellten Abstand zu fixieren, ist zusätzlich noch eine ebenfalls als Madenschraube ausgeführte Konterschraube 8 im Hebel 3 vorgesehen.

Die Übertragungsplatte 4 ist beim Entlanggleiten des Hebels 3 oder des Übertragungselementes 5 in Richtung hin zum Ventilsitz 1 vorzugsweise entgegen einer elastischen Federbelastung bewegbar. Diese Federbelastung wirkt also in Richtung hin zum Hebel 3 und damit in Richtung Öffnungsstellung des Ventils. Im gezeigten Ausführungsbeispiel wird diese Federbelastung realisiert, indem die Übertragungsplatte 4 selbst elastisch verformbar ausgestaltet ist. Dies kann z. B. erreicht werden, indem die Übertragungsplatte 4, wie in den Ausführungsbeispielen gezeigt, eine Blattfeder oder ein Blattfederpaket aus mehreren Blattfedern aufweist. Die Übertragungsplatte 4 ist in dem gezeigten Ausführungsbeispiel an ihren Rändern mittels der im Gehäuseoberteil 15 vorgesehenen Schultern 26 abgestützt. Sie kann nur im Bereich zwischen den abgestützten Rändern - hier in ihrem mittleren Bereich - in Richtung hin zum Ventilsitz 1 bewegt werden.

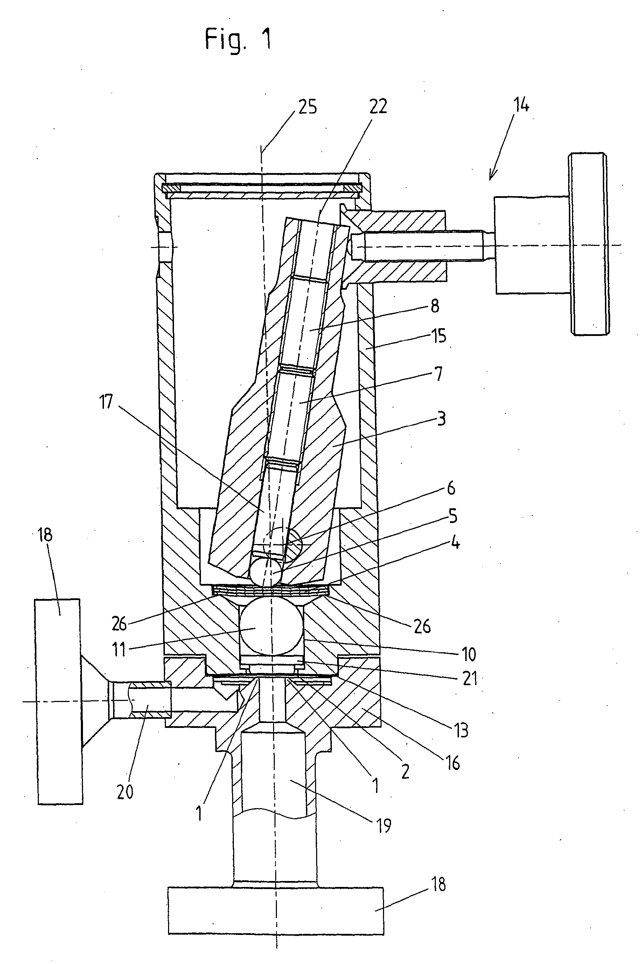

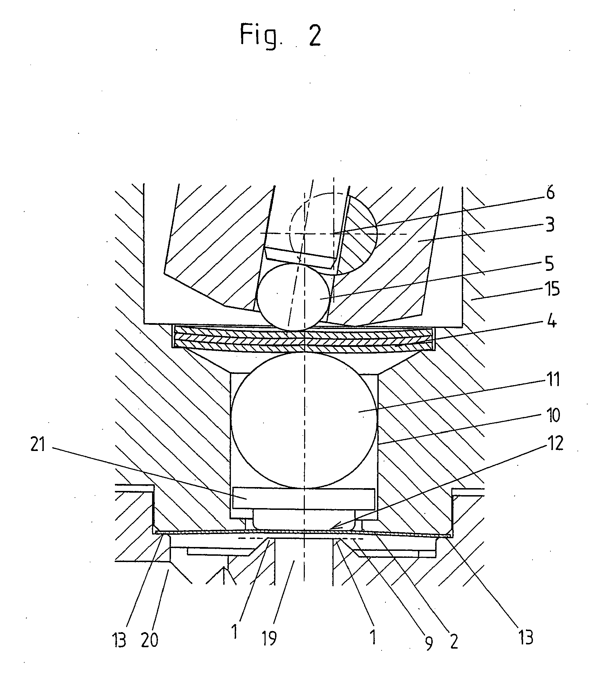

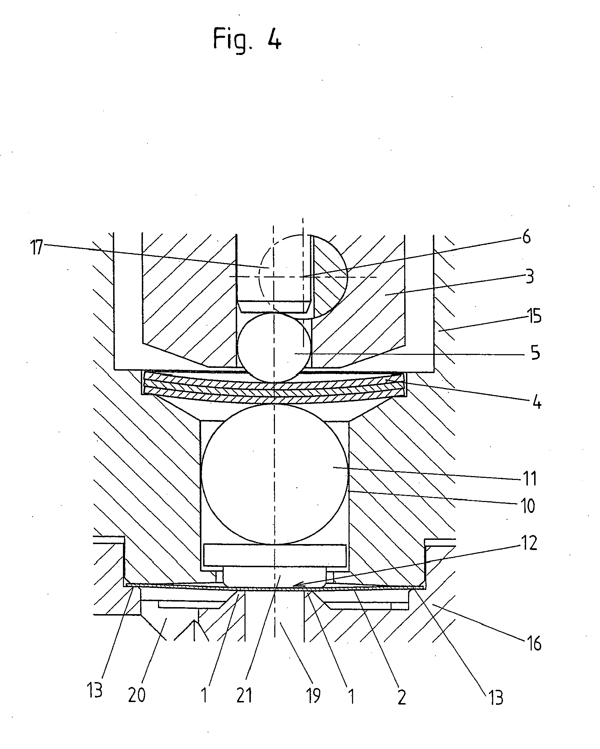

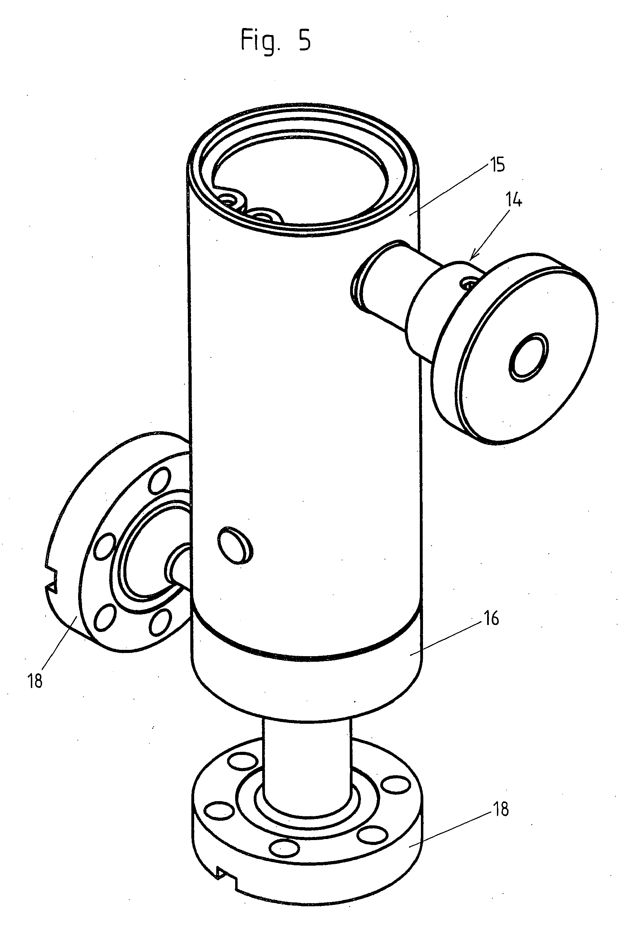

Durch das Entlanggleiten des Übertragungselementes 5 bzw. des Hebels 3 an der Übertragungsplatte 4 wird im Wesentlichen nur eine orthogonal zu der vom Ventilsitz 1 aufgespannten Ebene 9 wirkende Kraftkomponente in Richtung hin zum Ventilsitz 1 übertragen. Da es aber insbesondere bei der Verwendung im Vakuum und im Hochvakuum auf ein äußerst exaktes Schließen des Verschlussorgans 2 ankommt, kann wie im hier gezeigten Ausführungsbeispiel zwischen der Übertragungsplatte 4 und dem Verschlussorgan 2 zusätzlich noch eine Kompensationseinrichtung vorgesehen sein, die eine parallele Kraftkomponente parallel zur Ebene 9 in der Weise kompensiert, dass sie nicht auf das Verschlussorgan 2 übertragen wird. Diese Kompensationseinrichtung weist im ersten Ausführungsbeispiel gemäß der Fig. 1 bis 5 eine in einem Kanal 10 zwangsgeführte Kugel 11 auf, die auf der dem Hebel 3 gegenüberliegenden Seite der Übertragungsplatte 4 an dieser anliegt. Die Kugel 11 wird von der Übertragungsplatte 4 beim Verkippen des Hebels von der in Fig. 1 gezeigten Öffnungsstellung in die in Fig. 3 gezeigte Schließstellung in Richtung hin zum Ventilsitz 1 bewegt. Mittels der Kugel 11 wird jegliche noch von der Übertragungsplatte 4 übertragene Kraftkomponente parallel zur Ebene 9 in die Wandung des Kanals 10 eingeleitet und damit eliminiert. Die Kugel 11 überträgt auf die Zwischenplatte 21 ausschließlich eine orthogonale Kraftkomponente, die orthogonal auf die von dem Ventilsitz 1 aufgespannte Ebene 9 wirkt. Wie insbesondere in den Detaildarstellungen gemäß Fig. 2 und 4 zu sehen, weist die Kompensationseinrichtung - hier in Form der Zwischenplatte 21 - in Richtung hin zum Verschlussorgan 2 eine ebene Außenfläche 12 auf, mit der sie das Verschlussorgan berührt. Diese Außenfläche 12 sollte größer als die vom Ventilsitz 1 in der Ebene 9 aufgespannte Fläche sein, damit das Verschlussorgan 2 möglichst vollflächig auf den Ventilsitz aufgepresst wird. Die zwischen Verschlussorgan 2 und Ventilsitz 1 erreichbare Abdichtung ist nur dann gegeben, wenn das Verschlussorgan auf den Ventilsitz entsprechend aufgepresst wird, und kann daher als dynamische Dichtung bezeichnet werden.

Das Verschlussorgan 2 ist, wie bereits erwähnt, in den gezeigten Ausführungsbeispielen als Metallmembran ausgebildet. Günstig ist es, wenn das Verschlussorgan 2 in Richtung hin zur Öffnungsstellung (Fig. 1 und 2) federbelastet ist. Im ersten Ausführungsbeispiel gemäß der Fig. 1 bis 5 wird dies erreicht, indem die Membrane selbst in Richtung hin zur Öffnungsstellung elastisch vorgespannt ist. Darüber hinaus ist die Membrane in diesem Ausführungsbeispiel zwischen dem Gehäuseoberteil 15 und dem Gehäuseunterteil 16 randlich eingespannt, wobei die randliche Einspannung 13 der Membrane gleichzeitig eine gasdichte Abdichtung zwischen Gehäuseunterteil 16 und Gehäuseoberteil 15 bildet. Dies stellt sicher, dass kein durch den Einlasskanal 20 in das Gasdosierventil eintretendes Gas auf die vom Ventilsitz 1 abgewandte Seite des Verschlussorgans 2 gelangen kann. Diese Abdichtung ist permanent vorhanden und kann daher auch als statische Dichtung bezeichnet werden.

Die Dichtflächen der statischen und/oder der dynamischen Dichtung, also insbesondere die entsprechenden Bereiche des Verschlussorgans 2 bzw. der Membrane, der Gehäuseteile 15 und 16, wie auch der Ventilsitz 1 können einzeln oder jeweils paarweise beschichtet, vorzugsweise versilbert oder vergoldet, werden.

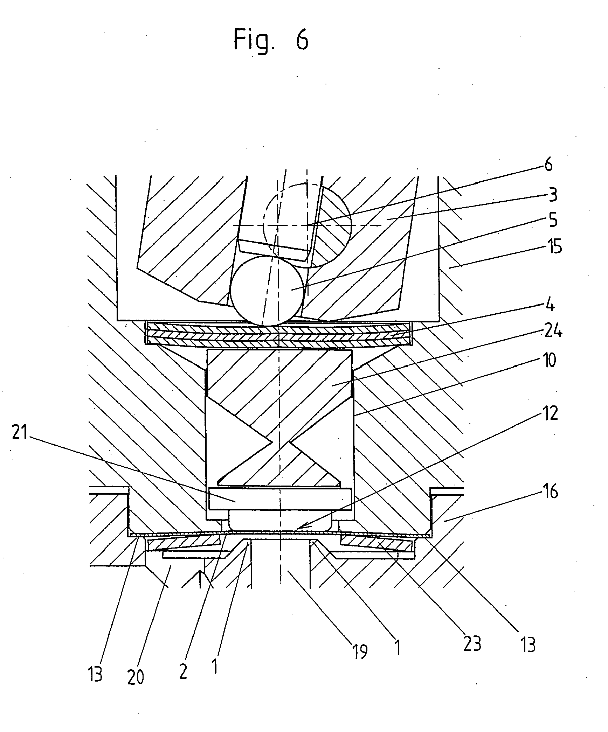

Fig. 6 zeigt alternative Ausgestaltungsformen in Form eines zweiten Ausführungsbeispiels. Dabei sind in einer Detaildarstellung der Öffnungsstellung analog zu Fig. 2 nur die Unterschiede zum ersten Ausführungsbeispiel dargestellt. Der Rest des Gasdosierventils gemäß des zweiten Ausführungsbeispiels entspricht dem zum ersten Ausführungsbeispiel gesagten.

Im Unterschied zum ersten Ausführungsbeispiel ist im zweiten Ausführungsbeispiel gemäß Fig. 6 die Federbelastung des Verschlussorgans 2 nicht durch eine entsprechende Vorspannung der Membrane, sondern durch einen zusätzlichen Federring 23 realisiert. Dieser spannt das Verschlussorgan 2 in Richtung der in Fig. 6 gezeigten Öffnungsstellung vor.

Ein weiterer Unterschied zum ersten Ausführungsbeispiel besteht in der Ausbildung der zwischen der Übertragungsplatte 4 und dem Verschlussorgan 2 angeordneten Kompensationseinrichtung zur Kompensation einer parallel zur Ebene 9 wirkenden Kraftkomponente. Im Ausführungsbeispiel gemäß Fig. 6 ist hierfür ein Biegegelenk 24 vorgesehen, welches dafür sorgt, dass auf das Verschlussorgan 2 ausschließlich eine orthogonal zur vom Ventilsitz 1 aufgespannten Ebene 9 gerichtete Kraftkomponente übertragen wird. Anstelle des Biegegelenkes könnte natürlich auch jedes andere entsprechend gebaute Gelenk verwendet werden.

Abschließend sei noch darauf hingewiesen, dass die Abdichtung zwischen Gehäuseoberteil 15 und Gehäuseunterteil 16 und damit die statische Dichtung nicht zwingend über ein seitliches Einspannen eines als Membran ausgebildeten Verschlussorgans 2 realisiert werden muss. Es ist auch möglich, entsprechende Dichtungen losgelöst vom Verschlussorgan 2 zwischen Gehäuseoberteil 15 und Gehäuseunterteil 16 vorzusehen. Das Verschlussorgan 2 kann dann z. B. separat über einen entsprechenden längsbewegbaren Balg gegen das Gehäuseoberteil abgedichtet und als starre Platte ausgebildet sein. Die Federbelastung kann dann über entsprechend am Gehäuseoberteil 15 oder Gehäuseunterteil 16 abgestützte Federn realisiert sein.

### Legende zu den Hinweisziffern:

- 1: Ventilsitz
- 2: Verschlussorgan
- 3: Hebel
- 4: Übertragungsplatte
- 5: Übertragungselement
- 6: Kippachse
- 7: Justiereinrichtung
- 8: Konterschraube
- 9: Ebene
- 10: Kanal
- 11: Kugel
- 12: ebene Außenfläche
- 13: randliche Einspannung
- 14: Aktuator
- 15: oberes Gehäuseteil
- 16: unteres Gehäuseteil
- 17: Zwischenstift
- 18: Anschlussflansche
- 19: Auslasskanal
- 20: Einlasskanal
- 21: Zwischenplatte
- 22: Längsachse
- 23: Zusätzlicher Federring
- 24: Biegegelenk
- 25: Längsachse
- 26: Schulter
- 27: Abstand
- 28: Abstand

## Patentansprüche

1. Gasdosierventil mit einem Ventilsitz (1) und einem in einer Schließstellung an den Ventilsitz (1) anpressbaren Verschlussorgan (2) sowie einem kippbaren Hebel (3) zum Anpressen des Verschlussorgans (2) an den Ventilsitz (1), **dadurch gekennzeichnet, dass** zwischen dem Verschlussorgan (2) und dem Hebel (3) eine Übertragungsplatte (4) in der Weise angeordnet ist, dass der Hebel (3) oder ein an ihm angeordnetes Übertragungselement (5) während einer Kippbewegung des Hebels (3) an der Übertragungsplatte (4) entlang gleitet, wodurch das Verschlussorgan (2) von einer Öffnungsstellung in seine Schließstellung bewegbar ist.

2. Gasdosierventil nach Anspruch 1, **dadurch gekennzeichnet, dass** die Übertragungsplatte (4) beim Entlanggleiten des Hebels (3) oder des Übertragungselementes (5) gegen eine elastische Federbelastung in Richtung hin zum Ventilsitz (1) bewegbar ist.

3. Gasdosierventil nach Anspruch 2, **dadurch gekennzeichnet, dass** die Übertragungsplatte (4) zur Bereitstellung der elastischen Federbelastung elastisch verformbar ist.

4. Gasdosierventil nach Anspruch 3, **dadurch gekennzeichnet, dass** die Übertragungsplatte (4) zumindest bereichsweise an ihren Rändern in der Weise abgestützt ist, dass sie nur in einem Bereich außerhalb der abgestützten Ränder, vorzugsweise in einem mittleren Bereich, in Richtung hin zum Ventilsitz (1) bewegbar ist.

5. Gasdosierventil nach einem der Ansprüche 1 bis 4, **dadurch gekennzeichnet, dass** die Übertragungsplatte (4) eine Blattfeder oder ein Blattfederpaket aus mehreren Blattfedern aufweist.

6. Gasdosierventil nach einem der Ansprüche 1 bis 5, **dadurch gekennzeichnet, dass** der Hebel (3) oder das Übertragungselement (5) eine abgerundete Oberfläche aufweist, mit der der Hebel (3) oder das Übertragungselement (5) an der Übertragungsplatte (4) entlang gleitet.

7. Gasdosierventil nach einem der Ansprüche 1 bis 6, **dadurch gekennzeichnet, dass** als Übertragungselement (5) zumindest eine, vorzugsweise drehbar gelagerte, Kugel oder zumindest eine, vorzugsweise drehbar gelagerte, Walze vorgesehen ist.

8. Gasdosierventil nach einem der Ansprüche 1 bis 7, **dadurch gekennzeichnet, dass** der Hebel (3) so angeordnet ist, dass er beim Entlanggleiten an der Übertragungsplatte (4) während der Bewegung des Verschlussorgans (2) von einer maximal möglichen Öffnungsstellung in die Schließstellung immer auf einer Seite eines Totpunktes bleibt und vorzugsweise auch in der Schließstellung vom Totpunkt beabstandet ist.

9. Gasdosierventil nach einem der Ansprüche 1 bis 8, **dadurch gekennzeichnet, dass** der Hebel (3) um eine, vorzugsweise exzentrisch angeordnete, Kippachse (6) kippbar gelagert ist, wobei vorzugsweise die Kippachse (6) seitlich neben der Längsachse (22) des Hebels (3) an diesem angreift.

10. Gasdosierventil nach Anspruch 9, **dadurch gekennzeichnet, dass** eine Justiereinrichtung (7) zur Einstellung des Abstandes zwischen der Kippachse (6) und dem Auflagepunkt des Hebels (3) oder des Übertragungselementes (5) auf der Übertragungsplatte (4) vorgesehen ist.

11. Gasdosierventil nach einem der Ansprüche 1 bis 10, **dadurch gekennzeichnet, dass** zwischen der Übertragungsplatte (4) und dem Verschlussorgan (2) eine Kompensationseinrichtung vorgesehen ist, die eine orthogonale Kraftkomponente in Richtung orthogonal zu einer durch den Ventilsitz (1) aufgespannten Ebene (9) überträgt und eine parallele Kraftkomponente parallel zu dieser Ebene (9) in der Weise kompensiert, dass diese nicht auf das Verschlussorgan (2) übertragbar ist.

12. Gasdosierventil nach Anspruch 11, **dadurch gekennzeichnet, dass** die Kompensationseinrichtung eine in einem Kanal (10) zwangsgeführte Kugel (11) aufweist.

13. Gasdosierventil nach einem der Ansprüche 11 oder 12, **dadurch gekennzeichnet, dass** die Kompensationseinrichtung eine ebene Außenfläche (12) aufweist, mit der sie das Verschlussorgan (2) berührt.

14. Gasdosierventil nach einem der Ansprüche 1 bis 13, **dadurch gekennzeichnet, dass** das Verschlussorgan (2) in Richtung hin zur Öffnungsstellung federbelastet ist.

15. Gasdosierventil nach einem der Ansprüche 1 bis 14, **dadurch gekennzeichnet, dass** das Verschlussorgan (2) als elastisch deformierbare und randlich eingespannte Membrane ausgebildet ist, wobei vorzugsweise die randliche Einspannung (13) der Membrane eine gasdichte Abdichtung zwischen zwei Gehäuseteilen (15, 16) bildet.
